## Europäisches Patentamt

(19) **European Patent Office**

**Office européen des brevets**

(11) Publication number: **0 124 177**
**B1**

(12) # EUROPEAN PATENT SPECIFICATION

(45) Date of publication of patent specification: **30.07.86**

(51) Int. Cl.⁴: **B 65 G 47/51**

(21) Application number: **84200587.8**

(22) Date of filing: **25.04.84**

(54) **Apparatus for transferring rows of articles delivered by a conveyor belt to a transversely extending conveyor belt.**

(30) Priority: **28.04.83 NL 8301506**

(43) Date of publication of application:
**07.11.84 Bulletin 84/45**

(45) Publication of the grant of the patent:
**30.07.86 Bulletin 86/31**

(84) Designated Contracting States:
**CH DE GB IT LI NL**

(56) References cited:
**DE-A-2 739 389**
**GB-A-1 043 904**
**GB-A-1 298 322**
**GB-A-1 585 451**
**GB-A-2 025 882**
**GB-A-2 029 353**

(73) Proprietor: **TEVOPHARM SCHIEDAM B.V.**
**P.O. Box 35 Conradstraat 4**
**NL-3100 AA Schiedam (NL)**

(72) Inventor: **van Maanen, Johannes Dominicus**
**Brahmsstraat 6**
**NL-2651 VK Berkel en Rodenrijs (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention relates to an apparatus for transferring articles which are delivered by means of a horizontal feed conveyor belt on which the articles are disposed in spaced apart rows extending across said belt, to at least one cross conveyor belt which extends transversely to the feed conveyor belt, comprising a first horizontal conveyor belt travelling in the same direction as the feed conveyor belt and of which the discharging end portion in its initial position is disposed above the cross conveyor belt and substantially covers it and a second conveyor belt aligned with said first conveyor belt so that the articles can be passed from the first to the second conveyor belt, the discharging end portion of the first conveyor belt being arranged for a longitudinal movement between said initial position and a retracted position, in which retracted position the discharging end of the first conveyor belt is in spaced apart relation with the receiving end of the second conveyor belt and disposed approximately above the side of the cross transveyor belt which is facing the first conveyor belt so that the articles are allowed to drop from the first conveyor belt onto said cross conveyor belt whereas means are provided which in response to the presence of articles in a correctly aligned row on the discharging end portion of the first conveyor belt said portion being situated in its initial position above the cross conveyor belt and to the cross conveyor belt being in a readiness, causes the discharging end portion of the first conveyor belt to move from said initial position to the retracted position and back again to its initial position. Such an apparatus is known from US patent specification 4281757.

An apparatus of this type serves in particular for transferring formed articles of food in particular sweets such as chocolate bars, biscuits, etc. from a continuously operating producing machine to one or more packaging machines of which each is fed by a cross conveyor belt.

In the known apparatus a plurality of more narrow upwardly inclined pick-up conveyors are mounted above the feed conveyor belt, of which conveyors each picks up a portion of each row of articles on the feed conveyor belt and transfers this portion to said first conveyor belt which is also situated above the feed conveyor belt and from which the part-rows disposed thereon are permitted to drop on a cross conveyor belt leading to a packaging machine by moving the discharging end portion of the first conveyor belt to the retracted position.

The second conveyor belt is aligned with the first conveyor belt and serves for receiving rows of articles advanced on the first conveyor belt when the cross conveyor belt for some reason is not in readiness for receiving these articles for instance because the associated packaging machine has got out of order or because there are still articles on the portion of the cross conveyor belt situated underneath the discharging end portion of the first conveyor belt. Said second conveyor belt is continuously driven in one direction and returns the articles refused by the cross conveyor belt and transferred thereon from the first conveyor belt, to the feed conveyor belt for which the second conveyor belt extends inclined for its greatest part towards the feed conveyor belt. These returned articles are then transferred manually or automatically to a stand-by packaging machine.

The known apparatus is rather complicated and does not present a solution for the problem that exists when for instance the stand-by packaging machine fails while still articles are returned on the feed conveyor belt because these articles for some reason could not be transferred on a cross conveyor belt.

The object of the invention is to provide an apparatus of the above mentioned type which presents a solution for said problem and which is of a more simple design.

Said object is attained in that in the apparatus according to the invention the second conveyor belt extends in horizontal direction and is driven for advancing as well in the one as in the other travelling direction and the receiving end portion of the second conveyor belt is arranged for being displaced in longitudinal direction to an extended position in which it extends over the cross conveyor belt and back again to the initial position, the receiving end of said belt in the extended position of its receiving end portion being positioned adjacent the discharging end of the first conveyor in its retracted position and substantially above the side of the cross conveyor belt facing the first conveyor belt, and first means are provided which in response to the presence of a correctly aligned row of articles on the discharging end portion of the first conveyor belt in its initial position and to the cross conveyor belt not being in readiness causes the second conveyor belt to advance in the main direction of conveyance over a predetermined distance so that the second conveyor belt receives said row of articles, and second means which in response to the foremost portion having a predetermined length of the first conveyor belt being free of articles causes the discharging end portion of the first conveyor belt to move to the retracted position and the receiving end portion of the second conveyor belt to extend over the cross conveyor belt to its extended position and said second conveyor belt to advance in the direction opposite to the main direction of conveyance, and third means which thereafter in response to the presence of a row of correctly aligned articles on said end portion and to the cross conveyor belt being in readiness causes said end portion to retract to the initial position and the second belt to stop so that the row of articles is permitted to drop on the cross conveyor belt and further causes the second conveyor belt to travel in the opposite direction and the end portion to extend again when said foremost portion of the first conveyor belt is still free of articles which third means causes the second conveyor belt merely to stop when the cross conveyor belt is not in readiness.

In this way each row of articles which for some reason could not be transferred to the cross conveyor belt are, so to speak temporarily stored on the second conveyor belt whereafter, when during a predetermined period of time no rows of articles are delivered by the first conveyor belt, the second conveyor belt takes over the function of the first conveyor belt and transfers the rows of articles temporarily stored thereon to the cross conveyor belt.

In particular in an apparatus in which a plurality of cross conveyor belts is arranged over which the articles delivered by the feed conveyor belt have to be distributed, according to the invention said first conveyor belt is formed by the feed conveyor belt whereas between said conveyor belt and the second conveyor belt a plurality of intermediate conveyor belts is arranged which are all aligned with each other and of which each is provided with a stationary receiving end and a discharging end portion extending over a cross conveyor belt which is movable to and fro in the longitudinal direction in the same way as in the first conveyor belt so that the discharging end of the first conveyor belt cooperates with the receiving end of the adjacent intermediate conveyor belt and the discharging end of the last intermediate conveyor belt cooperates with the receiving end of the second conveyor belt.

The last cross conveyor belt leads for instance to a stand-by packaging machine. If one of the main packaging machines fails then the articles which are otherwise transferred to the cross conveyor belt leading to said packaging machine, are transferred from the last intermediate conveyor belt to the cross conveyor belt leading to the stand-by packaging machine. If for some reason the cross conveyor belt leading to the stand-by packaging machine is not able to receive the articles then said articles are temporarily stored on said second conveyor belt. When in course of time the main packaging machine is operative again then no articles are advanced to the last intermediate conveyor belt so that the second conveyor belt may then travel in the opposite direction for transferring the rows of articles stored thereon to the cross conveyor belt leading to stand-by packaging machine when in the meantime said cross conveyor belt has become in readiness.

Advantageously the apparatus according to the invention is further formed so that the receiving end portion of the second conveyor belt is also arranged for a displacement in the longitudinal direction from its initial position to a retracted position in which retracted position the end of said end portion is spaced apart from the discharging end of the first conveyor belt in its initial position so that articles on said first conveyor belt are permitted to drop in the interspace formed thereby, means being provided which in response to the presence of a not correctly aligned row of articles on the discharging end portion of the first conveyor belt causes the receiving end of the second conveyor belt to move to said retracted position and the first conveyor belt to travel in the main direction of conveyance.

In this way any not correctly aligned row of articles is prevented from being transferred to the second conveyor belt in that said row is discharged by dropping in the interspace what is of great importance since otherwise such a row could block the transfer of further rows of articles situated on the second conveyor belt to the cross conveyor belt.

In an apparatus in which the discharging end of the first conveyor belt comprises with respect to the direction of travel a foremost reversing element and a hindmost reversing element arranged there behind and coupled therewith so that a loop is formed in the belt between said reversing elements and said reversing elements are mounted on a carriage or slide displaceable in the longitudinal direction which carriage or slide is connected with driving means, according to the invention said driving means are formed by a crank means mounted for rotation about a shaft which extends perpendicular to the direction of displacement, said crank means having a point of engagement which is spaced apart from said shaft and pivotable connected with an arm which at its other end is pivotable connected with the slide.

Preferably the distance between said point of engagement of said crank means and the shaft is adjustable for adjusting the length of the stroke and the point at which the arm engages the slide is adjustable for adjusting the initial position.

In a simple way said driving means may be made suitable for obtaining the additional movement of the receiving end portion of the second conveyor belt from its initial position to a retracted position in that the arm between the elements formed by said crank means and said slide is formed by a piston-cylinder assembly of which the cylinder is pivotable connected with the one element and the piston rod with the other element.

The invention is described in more detail by referring to the embodiment shown by way of example in the drawing in which:

Figure 1 shows in diagrammatic plan view an apparatus according to the invention,

Figure 2 is an elevation in the direction of arrow II in figure 1,

Figure 3 is an elevation in the direction of arrow III in figure 1,

Figure 4 shows in a diagrammatic plan view the driving means according to the invention,

Figure 5 shows a further embodiment of the driving means, and

Figure 6 shows still a further embodiment of the driving means.

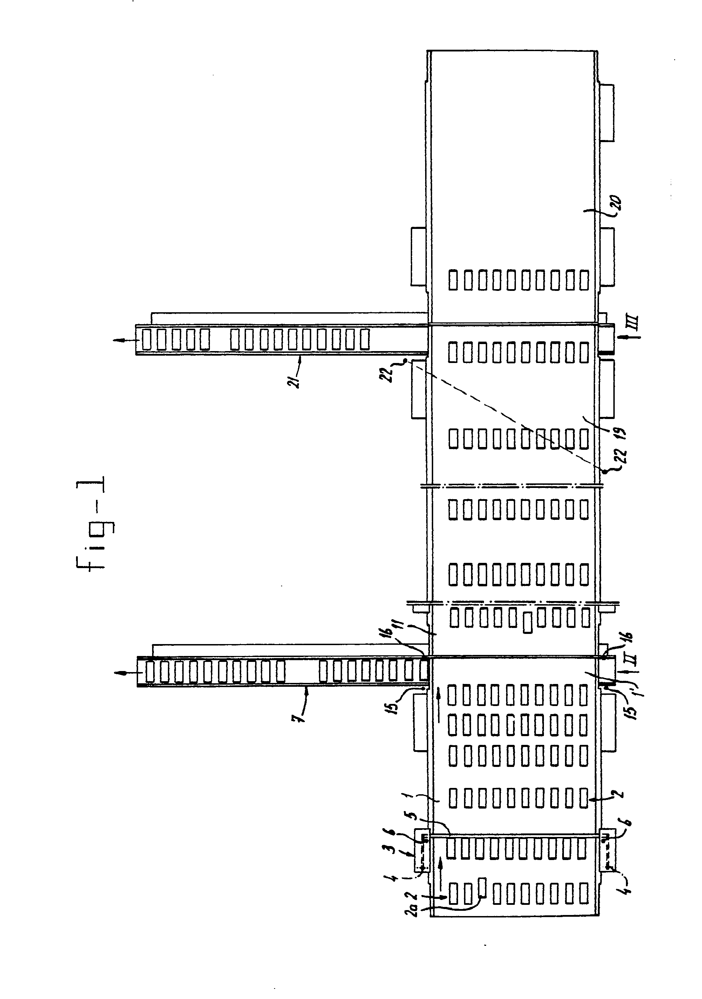

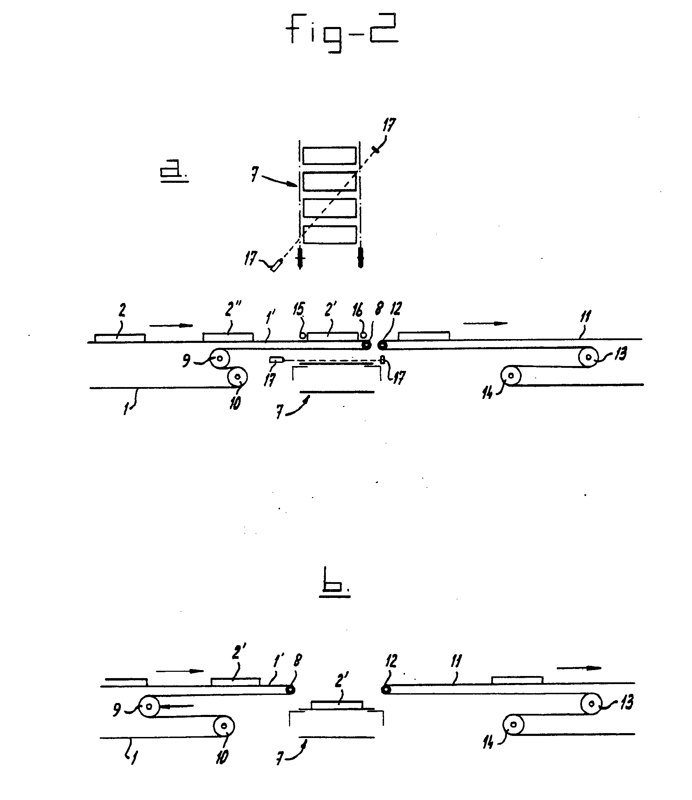

As shown in figure 1 the apparatus comprises a feed conveyor belt 1 on which rows of articles 2 are delivered from a producing machine which is not shown. In this conveyor belt an aligning mechanism 3 is provided which comprises a straight-edge 5 mounted for a pivotal movement about pivot points 4 and which is normally in a lifted position but whenever the beam of light from photo-electric cell 6 is interrupted by a row of articles swings downwardly to a position close above the conveyor belt 1 and remains in this position for a short period of time, so that an article as shown at 2a which is outside the row and which has first interrupted the beam of light is shifted back into the row so that a correctly aligned row is formed. The conveyor belt 1 has a discharging end portion 1' (see figure 2a) which extends over a cross conveyor belt 7 and which comprises a foremost reversing element 8 and a hindmost reversing element 9 mounted therebehind which reversing elements 8 and 9 are mounted on a carriage or slide (not shown) displaceable in longitudinal direction. In this way the discharging end portion 1' is movable from the initial position shown in figure 2a to the retracted position shown in figure 2b. At 10 a fixed reversing element is shown.

Behind the first conveyor belt 1 a first intermediate conveyor belt 11 is arranged of which the receiving end portion is passed over fixed reversing means 12, 13 and 14 so that said receiving end portion meets the discharging end portion 1' of the first conveyor belt 1 when said discharging end portion 1' is in its initial position as shown in figure 2a. The discharging end portion of the first intermediate conveyor belt 11 which is not shown is formed in the same way as the discharging end portion 1' of the first conveyor belt, also a cross conveyor belt similar to the cross conveyor belt 7 being arranged underneath said discharging end portion.

Above the discharging end portion 1' in its initial position two spaced apart photo-electric cell assemblies 15 and 16 are provided whereas above the cross conveyor belt 7 a diagonally directed photo-electric cell assembly 17 is provided, as shown in the top portion of figure 2a in which the portion of cross conveyor belt 7 which is situated underneath the discharging end portion 1' is shown in plan view.

In operation the rows of articles 2 are delivered on the first conveyor belt 1 and are aligned if necessary by the aligning device 3. Such a row of articles then interrupts the beam of light from the photo-electric cell 15 and when then none of the backsides of these articles project backwardly beyond said beam of light and none of the front sides of these rows of articles has interrupted the beam of light from the photo-electric cell 16 so that after the interruption of the beam of light from the photo-electric cell 15 both beams of light 15 and 16 are uninterrupted, such a row 2' in figure 2a has arrived correctly aligned between the photo-electric cells 15 and 16. When at that moment also the cross conveyor belt 7 is in readiness for receiving articles what means that in the first instance the portion of this cross conveyor belt situated underneath the first conveyor belt must be free from articles, this being indicated by the photo-electric cell 17 in that its beam of light is not interrupted, then the discharging end portion 1' of the first conveyor belt 1 is moved to the retracted position (figure 2b) so that the row of articles 2' drop on the cross conveyor belt. Then the discharging end portion 1' is returned to its initial position. The then foremost row of articles 2'' on the conveyor belt 1 is subsequently transferred to the first intermediate conveyor belt 11 because the cross conveyor belt is not yet in readiness for receiving said row. The row of articles 2'' is then transferred in the same way as described herein above to the next not shown cross conveyor belt at the discharging end of the conveyor belt 11.

According to the need one or more intermediate conveyor belts 11 having associated cross conveyor belts may be arranged behind each other.

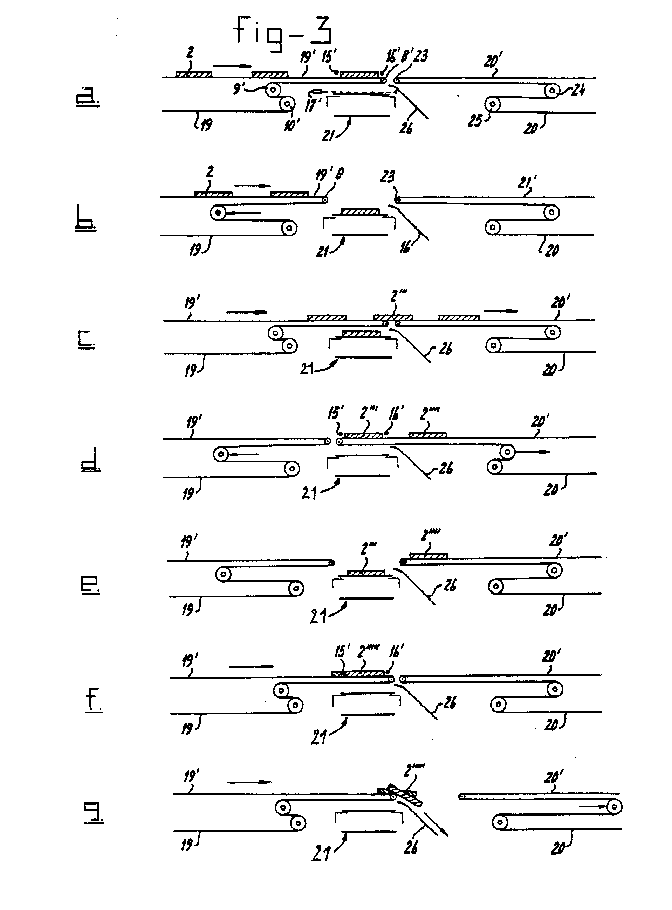

The last intermediate conveyor belt 19 cooperates with a run out or second conveyor belt 20 (see also figure 3). The discharging end portion 19' of conveyor belt 19 is passed over reversing means 8', 9' and 10' in the same way as the first conveyor belt, reversing means 8' and 9' being mounted on a slide arranged for a sliding movement in longitudinal direction so that the discharging end portion 19' can be moved from the initial position shown in figure 3a to the retracted position shown in figure 3b and back again. Also a cross conveyor belt 21 is arranged in the same way having the photo-electric cell assembly 17' corresponding with assembly 17. Also the photo-electric cell assemblies 15' and 16' corresponding to the assemblies 15 and 16 are arranged whereas moreover a diagonally directed photo-electric cell assembly 22 is arranged above the foremost end portion of the conveyor belt 19 (see figure 1).

The run out conveyor belt 20 has a receiving end portion 20' which is passed over reversing means 23 and 24 coupled to each other and further over fixed reversing means 25. Reversing means 23 and 24 are for instance mounted on a slide which is displaceable in the longitudinal direction of conveyor belt 20. In this way the receiving end portion 20' can be moved from the initial position shown in figure 3a to the extended position shown in figure 3d and moreover to the retracted position shown in figure 3g. Further a discharge chute 26 is provided between conveyor belts 19 and 20 and alongside of the cross conveyor belt 21.

The cross conveyor belt 21 leads for instance to a stand-by packaging machine so that the rows of articles 2 are only delivered to conveyor belt 19 when for instance a packaging machine at the end of one of the cross conveyor belts 7 has got out of order or when for some reason such a cross conveyor belt 7 itself has not been able to receive a row of articles. Then the rows of articles 2 are transferred on the cross conveyor belt 21 in the same way as described herein above for conveyor belt 1, in that the discharging end portion 19' is moved to the retracted position (figure 3b) whenever the correct alignment of such a row has been detected by the photo-electric cell assemblies 15' and 16'.

However, when for some reason the cross conveyor belt 21 is not able to receive such a row of articles then such row of articles 2''' is taken over by the conveyor belt 20 (figure 3c) said conveyor belt 20 being caused to travel in the main conveying direction shown by the arrow only over such relative short distance that said row of articles 2''' is just taken over whereafter the belt 20 stops. When thereafter or after some period of time the conveyor belt 20 has to take over again a row of articles then said conveyor belt is caused again to travel in said direction over a short distance so that rows of articles are temporarily stored on conveyor belt 20.

Has the defect been remedied so that all articles advanced on the first conveyor belt 1 are transferred in the normal way through the cross conveyor belts 7 to the various packaging machines then at a given moment the conveyor belt 19 will be free from articles what is detected by photo-electric cell assembly 22. Then the discharging end portion 19' of conveyor belt 19 is brought into the retracted position whereafter the receiving end portion 20' of conveyor belt 20 is shifted into the extended position (see figure 3d) so that said end portion 20' extends over cross conveyor belt 21. When then the cross conveyor belt 21 is in readiness for receiving articles and a correctly aligned row of articles 2''' has arrived between the photo-electric cell assemblies 15' and 16' in that in the meantime the conveyor belt 20 is caused to travel into the direction opposite to the main conveying direction so that the receiving end portion 20' has become a discharging end portion, then said end portion 20' is brought again into the initial position (figure 3a) whereby the row 2''' drops on the cross conveyor belt 21 whereas also the conveyor belt 20 is stopped. Thereafter the end portion 20' can be shifted again into the extended position (figure 3d) and subsequently again into the initial position (figure 3a) for transferring a next row of articles 2'''' onto the cross conveyor belt 21 etc. until all rows of articles on conveyor belt 20 have been removed.

However, is at the given moment the cross conveyor belt not yet free, then conveyor belt 20 stops and remains in the position indicated in figure 3d until the cross conveyor belt 20 is in readiness whereafter the end portion 20' is brought into the initial position so that a row of articles disposed between the photo-electric cell assemblies 15' and 16' is permitted to drop on the cross conveyor belt 21.

Thus conveyor belt 20 serves as a temporary storage means for rows of articles which could not be transferred to the cross conveyor belt 21, whenever said belt is also capable to transfer rows of articles disposed thereon to the cross conveyor belt 21.

It is of the utmost importance that all rows of articles temporarily stored on conveyor belt 20 are correctly aligned since when a not correctly aligned row arrives between the photo-electric cell assemblies 15' and 16' one of the beams of light will be interrupted permanently resulting into such row not being capable to drop on the cross conveyor belt 21 as the end portion 20' is then not returned to the initial position.

In order to prevent not correctly aligned rows of articles from being transferred to conveyor belt 20 such a row is discharged. Therefore when such a row 2'''''' (see figure 3f) on conveyor belt 19 has arrived between the photo-electric cell assemblies 15' and 16' so that one of the beams of light, in figure 3f the beam of light from the photo-electric cell 15' is permanently interrupted, at the moment that also the beam of light from the photo-electric cell 16' is interrupted, the end portion 20' of conveyor belt 20 is moved into the retracted position (figure 3g) so that the row of articles 2'''''' falls off from the conveyor belt 19 and is discharged along the discharge chute 26.

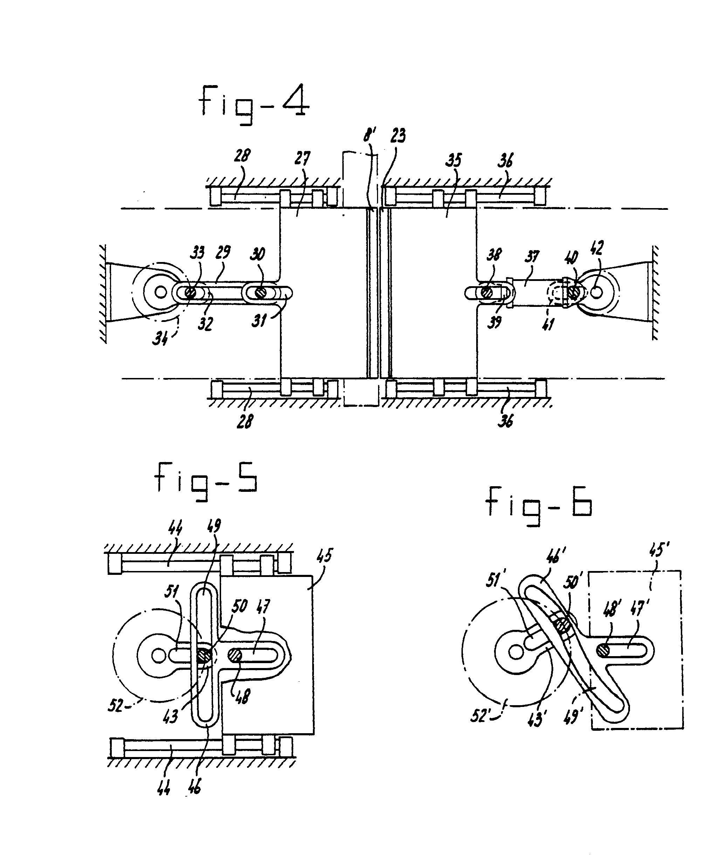

In figure 4 the driving means for displacing the end portion 19' of the conveyor belt 19 and the end portion 20' of the conveyor belt 20 is schematically shown in top view. The reversing means 8' and 9' are mounted on a sliding plate 27 which is supported for a sliding movement by slide rods 28. An arm 29 is pivotably connected at point 30 with the sliding plate 27, the pivot point 30 being adjustable along the slot 31 provided in plate 27 whereby the position of the reversing means 8' and 9' can be changed. At its other end the arm 29 is pivotably connected with the crank 32 by means of pivot point 33 which is displaceable in a slot formed in the crank 32 for changing the stroke length of the crank. The crank 32 is driven into rotation by means of the motor with reduction gear 34 so that at each revolution of the crank 32 the end portion 19' of conveyor belt 19 is moved from the initial position shown in figure 3a to the retracted position shown in figure 3b and back again into the initial position.

The reversing means 23 and 24 are mounted on sliding plate 35 supported for a sliding movement by slide rods 36. A piston-cylinder assembly 37 is pivotally connected at point 38 with the sliding plate 35, pivot point 38 being shiftable along the slot 39 provided in plate 35 for adjusting the initial position of the end portion 21 of conveyor belt 20. The piston-cylinder assembly 37 is connected at its other end at pivot point 40 with a crank 41 pivot point 40 being displaceable along a slot formed in crank 41 for changing the stroke length of the crank. The crank 41 is mounted on a motor having a reduction gear 42 so that with the smallest length of the piston-cylinder assembly 37 as shown in figure 4 with each revolution of the crank 41 the end portion 20' is moved from the initial position in figure 3a to the retracted position shown in figure 3g and back again in the initial position. However, when the piston-cylinder assembly 37 is extended then with each revolution of the crank 41 the end portion 20' is moved from the initial position shown in figure 3a to the extended position shown in figure 3d.

It is to be understood that the driving means shown in the left hand portion of figure 4 may be also be applied for moving the end portion 1' of conveyor belt 1 and the discharging end portions of the intermediate conveyor belts 11 from their initial positions to the retracted positions and back again in the initial positions.

In figure 5 a different embodiment of the engagement of a crank 43 with a sliding plate 45 is shown which sliding plate is arranged for a sliding movement along the rods 44. In this embodiment a substantially T-shaped intermediate element 46 is arranged which is connected with sliding plate 45 by means of fixing means 48 which engages the slot 47 formed in intermediate element 46 so that by loosening the fixing means 48 and shifting the sliding plate 45 and fastening again fixing means 48 in the initial position of the sliding plate 44 can be changed. The intermediate element 46 is provided with a transversely extending slot 49 in which pin 50 extends which is connected with crank means 43 so that the position of pin 50 with respect to crank means 43 can be changed by shifting pin 50 inside the slot 51 whereby the stroke length can be changed. The crank means 43 is mounted on a motor having a reduction gear 52.

In figure 6 an alternative of the embodiment shown in figure 5 is shown. In this embodiment the intermediate element 46' has a slanting main portion in which a substantially sinusoidal slot 49' is formed. In figure 6 all elements which correspond functionally with the elements shown in figure 5 are denoted with the same reference numeral to which is added an accent. By the embodiment shown in figures 5 and 6 the speeds and accelerations of the shifting plates which occur in operation are distributed in a more favourable way.

**Claims**

1. An apparatus for transferring articles (2) which are delivered by means of a horizontal feed conveyor belt (1) on which the articles (2) are disposed in spaced apart rows extending across said belt (1), to at least one cross conveyor belt (21) which extends transversely to the feed conveyor belt (1), comprising a first horizontal conveyor belt (19) travelling in the same direction as the feed conveyor belt (1) and of which the discharging end portion (19') in its initial position is disposed above the cross conveyor belt (21) and substantially covers it and a second conveyor belt (20) aligned with said first conveyor belt (19) so that the articles (2) can be passed from the first to the second conveyor belt, the discharging end portion (19') of the first conveyor belt (19) being arranged for a longitudinal movement between said initial position and a retracted position, in which retracted position the discharging end (19') of the first conveyor belt (19) is in spaced apart relation with the receiving end (20') of the second conveyor belt (20) and disposed approximately above the side of the cross conveyor belt (21) which is facing the first conveyor belt (19) so that the articles (2) are allowed to drop from the first conveyor belt (19) onto said cross conveyor belt (21) whereas means are provided which in response to the presence of articles (2) in a correctly aligned row on the discharging end portion (19') of the first conveyor belt (19) said portion being situated in its initial position above the cross conveyor belt (21) and to the cross conveyor belt (21) being in readiness, causes the discharging end portion (19') of the first conveyor belt (19) to move from said initial position to the retracted position and back again to its initial position characterized in that the second conveyor belt (20) extends in horizontal direction and is driven for advancing as well in the one as in the other travelling direction and the receiving end portion (20') of the second conveyor belt (20) is arranged for being displaced in longitudinal direction to an extended position in which it extends over the cross conveyor belt (21) and back again to the initial position, the receiving end of said belt (20) in the extended position of its receiving end portion (20') being positioned adjacent the discharging end (19') of the first conveyor (19) in its retracted position and substantially above the side of the cross conveyor belt (21) facing the first conveyor belt (19), and first means are provided which in response to the presence of a correctly aligned row of articles (2''') on the discharging end portion (19') of the first conveyor belt (19) in its initial position and to the cross conveyor belt (21) not being in readiness causes the second conveyor belt (20) to advance in the main direction of conveyance over a predetermined distance so that the second conveyor belt (20) receives said row of articles (2'''), and second means which in response to a predetermined length of the downstream portion of the first conveyor belt (19) being free from articles (2) causes the discharging end portion (19') of the first conveyor belt (19) to move to the retracted position and the receiving end portion (20') of the second conveyor belt (20) to extend over the cross conveyor belt (21) to its extended position and said second conveyor belt (20) to advance in the direction opposite to the main direction of conveyance, and third means which thereafter in response to the presence of·a row of correctly aligned articles (2'''') on said end portion (20') and to the cross conveyor belt (21) being in readiness causes said end portion (20') to retract to the initial position and the second belt (20) to stop so that the row of articles (2''') is permitted to drop on the cross conveyor belt (21) and further causes the second conveyor belt (20) to travel in the opposite direction so that the end portion (20') extends again if said downstream portion of the first conveyor belt (19) is still free from articles (2) which third means also causes the second conveyor belt (20) merely to stop when the cross conveyor belt (21) is not in readiness.

2. Apparatus according to claim 1, characterized in that the receiving end portion (20') of the second conveyor belt (20) is also arranged for a displacement in the longitudinal direction from its initial position to a retracted position in which retracted position the end of said end portion (20') is spaced apart from the discharging end (19') of the first conveyor belt (19) in its initial position so that articles (2''''') on said first conveyor belt (19) are permitted to drop in the interspace formed thereby, means being provided which in response to the presence of a not correctly aligned row of articles (2''''') on the discharging end portion (19') of the first conveyor belt (19) causes the receiving end (20') of the second conveyor belt (20) to move to said retracted position and the first conveyor belt (19) to travel in the main direction of conveyance.

3. Apparatus according to claim 1 or 2 in which a plurality of cross conveyor belts (7, 21) is arranged over which the articles (2) delivered by the feed conveyor belt (1) have to be distributed, characterized in that said first conveyor belt is formed by the feed conveyor belt (1) whereas between said conveyor belt (1) and the second conveyor belt (20) a plurality of intermediate conveyor belts (11, 19) is arranged which are all aligned with each other and of which each is provided with a stationary receiving end and a discharging end portion extending over a cross conveyor belt (7, 21) which end portion is movable to and fro in the longitudinal direction in the same way as in the first conveyor belt so that the discharging end of the first conveyor belt cooperates with the receiving end of the adjacent intermediate conveyor belt and the discharging end of the last intermediate conveyor belt (19) cooperates with the receiving end of the second conveyor belt (20).

4. Apparatus according to claim 1 in which the discharging end of the first conveyor belt comprises with respect to the direction of travel a foremost reversing element (8) and a hindmost reversing element (9) arranged there behind and coupled therewith so that a loop is formed in the belt between said reversing elements and said reversing elements are mounted on a carriage or slide displaceable in the longitudinal direction which carriage or slide is connected with driving means, characterized in that said driving means are formed by a crank means mounted for rotation about a shaft which extends perpendicular to the direction of displacement, said crank means (32) having a point of engagement (33) which is spaced apart from said shaft and pivotably connected with an arm (29) which at its other end is pivotably connected with the slide (27).

5. Apparatus according to claim 4 characterized in that the distance between said point of engagement (33) of said crank means (32) and the shaft is adjustable for adjusting the length of the stroke.

6. Apparatus according to claim 4 or 5, characterized in that the point (30) at which the arm (29) engages the slide (27) is adjustable for adjusting the initial position.

7. Apparatus according to claims 4—6, characterized in that the arm between the elements formed by said crank means and said slide is formed by a piston-cylinder assembly (37) of which the cylinder is pivotable connected with the one element and the piston rod with the other element.

**Patentansprüche**

1. Vorrichtung zur Überführung von Gegenständen (2), welche mittels einem horizontalen Zuführ-Bandförderer (1) zugeführt werden auf welchem diese Gegenstände (2) in voneinander distanzierten, quer zu diesem Bandförderer (1) verlaufenden Reihen angeordnet sind, zu mindestens einem Quer-Bandförderer (21), welcher quer zum Zuführ-Bandförderer (1) verläuft, mit einem ersten Horizontal-Bandförderer (19) welcher in der gleichen Richtung wie der Zuführ-Bandförderer (1) läuft und dessen Abgabeendteil (19') sich in seiner Ausgangsstellung oberhalb dem Quer-Bandförderer (21) befindet und diesen im wesentlichen überragt, und mit einem so auf den ersten Bandförderer (19) ausgerichteten zweiten Bandförderer (20), dass die Gegenstände (2) vom ersten zum zweiten Bandförderer überführt werden können, dass der Abgabeendteil (19') des ersten Bandförderers (19) zur Ausführung einer Längsbewegung zwischen seiner Ausgangsstellung und einer zurückgezogenen Stellung ausgebildet ist, wobei in dieser zurückgezogenen Stellung das Abgabeende (19') des ersten Bandförderers (19) sich distanziert vom Aufnahmeende (20') des zweiten Bandförderers (20) und ungefähr oberhalb der Seite des Quer-Bandförderers (21), welcher dem ersten Bandförderer (19) gegenübersteht, befindet, so dass die Gegenstände (2) vom ersten Bandförderer (19) auf den Quer-Bandförderer (21) fallen können, wobei Mittel vorgesehen sind, welche auf Grund der Anwesenheit von in einer korrekt ausgerichteten Reihe vorliegenden Gegenständen (2) auf dem Abgabeendteil (19') des ersten Bandförderers (19), während dieser Teil sich in seiner Ausgangsstellung oberhalb dem Querbandförderer (21) befindet, und des in Bereitschaft stehenden Quer-Bandförderers (21) bewirken, dass der Abgabeendteil (19') des ersten Bandförderers (19) von seiner Ausgangsstellung in die zurückgezogene Stellung und wieder zurück in seine Ausgangsstellung bewegt wird, dadurch gekennzeichnet, dass der zweite Bandförderer (20) sich in horizontaler Richtung erstreckt und angetrieben wird zum Vorrücken sowohl in der einen als auch in der anderen Transportrichtung, und dass der Aufnahmeendteil (20') des zweiten Bandförderers (20) angeordnet ist zu seiner Verschiebung in Längsrichtung in eine ausgefahrene Stellung in welcher er sich über den Quer-Bandförderer (21) erstreckt und wieder zurück in die Ausgangsstellung, wobei das Aufnahmeende dieses Bandes (20) in der ausgefahrenen Stellung seines Aufnahmeendteiles (20') sich neben dem Abgabeende (19') des in seiner zurückgezogenen Stellung befindenden ersten Förderers (19) und im wesentlichen oberhalb der dem ersten Bandförderer (19) gegenüberliegenden Seite des Quer-Bandförderers (21) befindet, und dass erste Mittel vorgesehen sind, welche auf Grund der Anwesenheit von in einer korrekt ausgerichteten Reihe vorliegenden Gegenständen (2''') auf dem in seiner Ausgangsstellung befindenden Abgabeendteil (19') des ersten Bandförderers (19) und des nicht in Bereitschaft stehenden Quer-Bandförderers (21) bewirken, dass der zweite Bandförderer (20) in der Hauptförderrichtung über eine vorbestimmte Distanz nach vorne bewegt wird, so dass der zweite Bandförderer (20) diese Reihe von Gegenständen (2''') aufnimmt, und dass zweite Mittel vorgesehen sind, welche auf Grund einer vorbestimmten Länge des von Gegenständen (2) freien, stromabwärts sich befindenden Teiles des ersten Bandförderers (19) bewirken, dass der Abgabeendteil (19') des ersten Bandförderers (19) in die zurückgezogene Stellung und der Aufnahmeendteil (20') des zweiten Bandförderers (20) über den Quer-Bandförderer (21) in seine ausgefahrene Stellung und der zweite Bandförderer (20) in zur Hauptförderrichtung entgegengesetzter Richtung vorwärts bewegt wird, und dass dritte Mittel vorgesehen sind, welche danach auf Grund der Anwesenheit von in einer korrekt ausgerichteten Reihe vorliegenden Gegenständen (2''') auf diesem Endteil (20') und dem in Bereitschaft stehenden Quer-Bandförderer (21) bewirken, dass der Endteil (20') in seine Ausgangsstellung zurückbewegt und das zweite Band (20) angehalten wird, so dass der Reihe von Gegenständen (2''') erlaubt werden kann, auf den Quer-Bandförderer (21) zu fallen, und ferner bewirken, dass der zweite Bandförderer (20) in die entgegengesetzte Richtung bewegt wird, so dass der Endteil (20') wieder ausgefahren wird, wenn der stromabwärts sich befindende Teil des ersten Bandförderers (19) immer bloss von Gegenständen (2) ist, wobei diese dritte Mittel auch bewirken, dass der zweite Bandförderer (20) nur dann angehalten wird, wenn der Quer-Bandförderer (21) sich nicht in Bereitschaft befindet.

2. Vorrichtung nach Anspruch 1, dadurch gekennzeichnet, dass der Aufnahmeendteil (20') des zweiten Bandförderers (20) ebenfalls angeordnet ist für eine Verschiebung in der Längsrichtung von seiner Ausgangsstellung in eine zurückgezogene Stellung, wobei in dieser zurückgezogenen Stellung das Ende des Endteiles (20') vom in seiner Ausgangsstellung sich befindenden Abgabeendteil (19') des ersten Bandförderers (19) distanziert ist, so dass auf dem ersten Bandförderer (19) sich befindenden Gegenständen (2'''') gestattet wird, in den dadurch gebildeten Zwischenraum zu fallen, und dass Mittel vorgesehen sind, welche auf Grund der Anwesenheit von einer nicht korrekt ausgerichteten Reihe von Gegenständen (2'''') auf dem Abgabeendteil (19') des ersten Bandförderers (19) bewirken, dass das Aufnahmeende (20') des zweiten Bandförderers (20) in seine zurückgezogene Stellung und der erste Bandförderer (19) in der Hauptförderrichtung bewegt wird.

3. Vorrichtung nach Anspruch 1 oder 2, in welcher eine Mehrzahl von Quer-Bandförderen (7, 21) angeordnet ist, über welche die mittels des Zuführ-Bandförderers (1) zugeführten Gegenstände (2) zu verteilen sind, dadurch gekennzeichnet, dass der erste Bandförderer durch den Zuführ-Bandförderer (1) gebildet wird, während zwischen diesem Bandförderer (1), und dem zweiten Bandförderer (20) eine Mehrzahl von Zwischen-Bandförderen (11, 19) angeordnet ist, welche alle aufeinander ausgerichtet sind und von denen jeder mit einem stationären Aufnahmeende und einem über einen Quer-Bandförderer (7, 21) sich erstreckenden Abgabeendteil aufweist, wobei dieser Endteil auf die gleiche Weise wie beim ersten Bandförderer in der Längsrichtung hin und her verschiebbar ist, so dass das Abgabeende des ersten Bandförderers mit dem Aufnahmeende des benachbarten Zwischen-Bandförderers und das Abgabeende des letzten Zwischen-Bandförderers (19) mit dem Aufnahmeende des zweiten Bandförderers (20) zusammenwirkt.

4. Vorrichtung nach Anspruch 1, in welcher das Abgabeende des ersten Bandförderers bezüglich der Förderrichtung ein vorderstes Umlenkelement (8) und ein hinterstes Umlenkelement (9) aufweist, welche so hinter diesem angeordnet und mit diesem verbunden sind, dass zwischen diesen Umlenkelementen eine Schleife im Band geformt wird, und die Umlenkelemente auf einem in der Längsrichtung verschiebbaren, mit Antriebsmitteln verbundenen Wagen oder Schlitten angeordnet sind, dadurch gekennzeichnet, dass die Antriebsmittel durch einen Kurbeltrieb gebildet werden, welcher zur Rotation um eine senkrecht zur Verschieberichtung sich erstreckende Welle angeordnet ist, und der Kurbeltrieb (32) eine von der Welle distanzierte und mit eine an seinem anderen Ende gelenkig mit dem Schlitten (27) verbundenen Arm (29) gelenkig verbundene Eingriffsstelle (33) aufweist.

5. Vorrichtung nach Anspruch 4, dadurch gekennzeichnet, dass die Distanz zwischen der Eingriffsstelle (33) des Kurbeltriebes (32) und der Welle zur Einstellung der Länge des Hubes einstellbar ist.

6. Vorrichtung nach Anspruch 4 oder 5, dadurch gekennzeichnet, dass die Stelle (30) an welcher der Arm (29) mit dem Schlitten (27) in Eingriff steht, zur Einstellung der Ausgangsstellung einstellbar ist.

7. Vorrichtung nach den Ansprüchen 4—6, dadurch gekennzeichnet, dass der Arm zwischen den durch den Kurbeltrieb und den Schlitten gebildeten Elementen durch eine Kolben-Zylinder-Einheit (37) gebildet wird, deren Zylinder schwenkbar mit dem einen Element und die Kolbenstange mit dem anderen Element verbunden ist.

## Revendications

1. Appareil pour transférer des objets (2) qui sont amenés par une bande d'alimentation horizontale (1) sur laquelle les objets (2) sont disposés en rangées espacées transversalement à la bande (1), à au moins une bande transporteuse transversale (21) qui s'étend transversalement par rapport à la bande d'alimentation (1), comprenant une première bande transporteuse horizontale (19) se déplaçant dans la même direction que la bande d'alimentation (1) et dont la portion terminale de décharge (19') est disposée, dans sa position initiale, au-dessus de la bande transporteuse transversale (21) et la recouvre pratiquement, et une deuxième bande transporteuse (20) alignée avec cette première bande transporteuse (19) de telle sorte que les objets (2) peuvent passer de la première à la deuxième bande transporteuse, la portion terminale de décharge (19') de la première bande transporteuse (19) étant disposée de façon à se déplacer longitudinalement entre cette position initiale et une position rétractée, dans laquelle l'extrémité de décharge (19') de la première bande transporteuse (19) est espacée de l'extrémité de réception (20') de la deuxième bande transporteuse (20) et est disposée sensiblement au-dessus du côté de la bande transporteuse transversale (21) qui fait face à la première bande transporteuse (19) de telle sorte que les objets (2) peuvent tomber de la première bande transporteuse (19) sur la bande transporteuse transversale (21), tandis que des moyens sont prévus qui, en réponse à la présence d'objets (2) dans une rangée correctement alignée sur la portion terminale de décharge (19') de la première bande transporteuse (19), cette portion terminale étant située dans sa position initiale au-dessus de la bande transporteuse transversale (21), et en réponse au fait que la bande transporteuse transversale (21) est prête, font déplacer la portion terminale de décharge (19') de la première bande transporteuse (19) depuis cette position initiale jusqu'à la position rétractée, et la ramènent ensuite à sa position initiale, caractérisé en ce que la deuxième bande transporteuse (20) s'étend horizontalement et est entraînée de façon à avancer aussi bien dans la première direction que dans l'autre direction de déplacement; en ce que la portion terminale de réception (20') de la deuxième bande transporteuse (20) est disposée pour être déplacée longitudinalement jusqu'à une position sortie dans laquelle elle s'étend sur la bande transporteuse transversale (21) et pour être ramenée à nouveau à la position initiale, l'extrémité de réception de cette bande (20) dans la position sortie de sa portion terminale de réception (20') étant disposée adjacente à l'extrémité de décharge (19') de la première bande transporteuse (19) dans sa position rétractée et pratiquement au-dessus du côté de la bande transporteuse transversale (21) faisant face à la première bande transporteuse (19); en ce qu'il est prévu des premiers moyens qui, en réponse à la présence d'une rangée d'objets (2''') correctement alignés sur la portion terminale de décharge (19') de la première bande transporteuse (19) dans sa position initiale et en réponse au fait que la bande transporteuse transversale (21) n'est pas prête, font avancer la deuxième band transporteuse (20) dans la direction principale de transport sur une distance prédéterminée, de façon que la deuxième bande transporteuse (20) reçoive cette rangée d'objets (2'''); en ce qu'il est prévu des deuxièmes moyens qui, en réponse au fait qu'une longueur prédéterminée de la portion aval de la première bande transporteuse (19) est dépourvue d'objets (2) amènent la portion terminale de décharge (19') de la première bande transporteuse (19) à la position rétractée, font que la portion terminale de réception (20') de la deuxième bande transporteuse (20) s'étend sur la bande transporteuse transversale (21) jusqu'à sa position sortie et font avancer la deuxième bande transporteuse (20) dans la direction opposée à la direction principale de transport; et en ce qu'il est prévu des troisièmes moyens qui ensuite, en réponse à la présence d'une rangée d'objets (2''') correctement alignés sur cette portion terminale (20') et en réponse au fait que la bande transporteuse transversale (21) est prête, font rétracter cette portion terminale (20') jusqu'à la position initiale et arrêter la deuxième bande (20) de sorte que la rangée d'objets (2''') peut tomber sur la bande transporteuse transversale (21) et déplacent en outre la deuxième bande transporteuse (20) dans la direction opposée de sorte que la portion terminale (20') s'étend à nouveau si la portion aval de la première bande transporteuse (19) est encore dépourvue d'objets (2), lesquels troisièmes moyens font également arrêter simplement la deuxième bande transporteuse (20) lorsque la bande transporteuse transversale (21) n'est pas prête.

2. Appareil selon la revendication 1, caractérisé en ce que la portion terminale de réception (20') de la deuxième bande transporteuse (20) est également disposée pour être déplacée dans la direction longitudinale depuis sa position initiale jusqu'à une position rétractée dans laquelle l'extrémité de cette portion terminale (20') est espacée de l'extrémité de décharge (19') de la première bande transporteuse (19) dans sa position initiale, que des objets (2'''''') sur la première bande transporteuse (19) peuvent tomber dans l'intervalle ainsi formé, des moyens étant prévus qui, en réponse à la présence d'une rangée d'objets (2'''''') non correctement alignés sur la portion terminale de décharge (19') de la première bande transporteuse (19) font que l'extrémité de réception (20') de la deuxième bande transporteuse (20) se déplace à sa position réractée et que la première bande transporteuse (19) se déplace dans la direction principale de transport.

3. Appareil selon l'une quelconque des revendications 1 et 2, dans lequel plusieurs bandes transporteuses transversales (7, 21) sont disposées, bandes sur lesquelles les objets (2) amenés par la bande d'alimentation (1) doivent être distribués, caractérisé en ce que la première bande transporteuse est formée par la bande transporteuse d'alimentation (1), tandis que plusieurs bandes transporteuses intermédiaires (11, 19) sont disposées entre cette bande d'alimentation (1) et la deuxième bande transporteuse (20), bandes intermédiaires qui sont toutes alignées l'une sur l'autre et dont chacune comporte une extrémité de réception stationnaire et une extrémité de portion terminale de décharge s'étendant sur une bande transporteuse transversale (7, 21), laquelle portion terminale peut être déplacée longitudinalement dans les deux sens de la même manière que la première bande transporteuse, de sorte que l'extrémité de décharge de la première bande transporteuse coopère avec l'extrémité de réception de la bande transporteuse intermédiaire adjacente et que l'extrémité de décharge de la dernière bande transporteuse intermédiaire (19) coopère avec l'extrémité de réception de la deuxième bande transporteuse (20).

4. Appareil selon la revendication 1, dans lequel l'extrémité de décharge de la première bande transporteuse comporte, par rapport au sens de déplacement, un élément d'inversion avant (8) et un élément d'inversion arrière (9) couplés ensemble de telle sorte que la bande forme une boucle entre ces éléments d'inversion et dans lequel ces éléments d'inversion sont montés sur un chariot ou un coulisseau pouvant être déplacé longitudinalement, lequel chariot ou coulisseau est relié à des moyens d'entraînement, caractérisé en ce que ces moyens d'entraînement sont formés par une manivelle montée pour tourner autour d'un arbre perpendiculaire au sens de déplacement, la manivelle (32) ayant un point d'attaque (33) espacé de l'arbre et articulé à un bras (29) dont l'autre extrémité est articulée au coulisseau (27).

5. Appareil selon la revendication 4, caractérisé en ce que la distance entre ce point d'attaque (33) de la manivelle (32) et l'arbre est réglable pour ajuster la longueur de la course.

6. Appareil selon l'une quelconque des revendications 4, 5, caractérisé en ce que le point (30) où le bras (29) est articulé sur le coulisseau (27) est réglable pour régler la position initiale.

7. Appareil selon l'une quelconque des revendications 4 à 6, caractérisé en ce que le bras disposé entre les éléments formés par la manivelle et le coulisseau est formé par un vérin (37) dont le cylindre est articulé sur un élément et dont la tige de piston est articulée sur l'autre élément.

fig-1

# fig-2

a.

b.

Fig-3

# Fig-4

# Fig-5

# Fig-6